# EUROPEAN PATENT SPECIFICATION

(11) **EP 4 368 553 B1**
(45) Date of publication and mention of the grant of the patent: **28.01.2026**
(21) Application number: 22206953.6
(22) Date of filing: 11.11.2022
(51) Int. Cl.: B66B 1/28, B66B 1/30

(54) **ELEVATOR SYSTEM AND METHOD OF CONTROLLING A POWER CONTROL SYSTEM**
AUFZUGSSYSTEM UND VERFAHREN ZUR STEUERUNG EINES LEISTUNGSSTEUERUNGSSYSTEMS
SYSTÈME D'ASCENSEUR ET PROCÉDÉ DE COMMANDE D'UN SYSTÈME DE COMMANDE DE PUISSANCE

(43) Date of publication of application: 15.05.2024
(73) Proprietor: OTIS Elevator Company, Farmington, CT 06032 (US)
(72) Inventor: OESTERLE, Robert, 13507 Berlin (DE); KOCUR, Micheal, 13507 Berlin (DE)
(74) Representative: Dehns

(56) References cited:
- WO-A1-2010/042118
- WO-A1-2014/014454

## Description

### Technical Field

The invention relates to an elevator system. In particular, the invention may be applicable to a multi-channel DC-DC power control system with a controller which can control each channel of the plurality of channels in the DC-DC converter. The invention also relates to the use of such a power control system to control a plurality of power sources in an elevator system.

### Background Art

Elevator systems can often include devices to supply and store power. For example, in case of a power outage it may be beneficial to have energy storage devices which can supply power to the elevator to move the car. Energy storage devices are also useful for storing surplus energy that is generated regeneratively when the elevator brakes. For example, power (or energy) storage devices may include batteries or supercapacitors or combinations of these. Elevator systems may also include other power sources such as solar cells or wind turbines which do not store energy, but can supply power to the system.

The elevator drive typically operates at a high voltage (e.g. a few hundred volts) while small wind turbines and solar cell arrays and batteries typically operate at lower voltage (e.g. tens of volts). Therefore, in order for power to flow between these devices and the main elevator drive, voltage converters are normally required. As the power sources and power storage devices are normally DC devices, DC-DC converters are normally required to convert between the low voltage DC devices and a high voltage DC bus in the elevator drive (which may then be used for a DC motor or it may be used to generate AC waveforms for an AC motor).

Existing multi-channel DC-DC converters are typically configured for connection to a single device, e.g. to a single battery (which may be a battery pack or array of batteries). The multiple channels of the multi-channel DC-DC converter are used to increase and control the current drawing capabilities from the batteries. For example, an elevator system may require a large power supply (and therefore a large current) when it is carrying a heavy load upwards, or at the initial acceleration phase of the car movement. At other times the power requirement of the elevator system may be lower, e.g. simply to maintain constant speed in the middle of a run. With a multi-channel DC-DC converter, a higher power can be supplied by drawing current simultaneously through multiple channels. For example, in a four-channel DC-DC converter, using all four channels at once will draw maximum current from the source and will generate maximum power for the elevator system. At other times, fewer channels, or even a single channel of the multi-channel DC-DC converter can be used to draw less current from the source. Additionally, in some circumstances the elevator may generate excess power (e.g. when carrying a heavy load downwards). This excess power can be directed into a power storage device such as a battery or supercapacitor. The multi-channel DC-DC converter can also be used for this process, although there is often a limit on the charging current that can be supplied to a battery. Therefore, a limited number of channels of the multi-channel DC-DC converter are typically used for charging a battery from regenerative power, i.e. fewer channels than are used for maximum power draw from the battery. All of this functionality is achievable with a single connection to the battery, i.e. only one positive battery terminal and one negative battery terminal. All of the channels of the multi-channel converter are connected to these two terminals. A controller is used to control the individual channels of the multi-channel DC-DC converter, i.e. to select how many channels are in operation at any given time, e.g. for a given task and given power or current requirement.

WO 2010/042118 A1 discloses a system including a building power distribution system for distributing electrical power to electrical loads within a building, a first electrical power generator located in or near the building, and a DC bus, an elevator motor, a converter between the building power distribution system and the DC bus, a converter between the DC bus and the elevator motor, a converter between the first electrical power generator and the DC bus, and a controller for controlling operation of the converters to operate the elevator motor, and to deliver power regenerated by the elevator motor and power generated by the first electrical power generator to the building power distribution system.

WO 2014/014454 A1 discloses a system for managing elevator power including a power line connected to a power grid, a motor connected to the power line and configured to receive power from the power line to drive an elevator, an alternative power source connected to the motor, and a power control system configured to control the power line to supply power to the motor to drive the elevator, to detect a predetermined threshold value of power supplied from the power line, and to supply both power from the power line and power from the alternative power source to the motor based on a determination that the predetermined threshold value of power is supplied from the power line.

### Summary of the Invention

According to a first aspect of the present invention, there is provided an elevator system in accordance with claim 1.

Different elevator systems may have different power sources and power storage devices. Typically, a separate DC-DC converter has been provided for each such device. For example, one DC-DC converter may be provided for a battery source and a separate DC-DC converter may be provided for a solar panel source. Each of those DC-DC converters may be a multi-channel DC-DC converter, but as each DC-DC converter had only a single source connection, i.e. a single positive source terminal and a single negative source terminal, separate DC-DC controllers were required. By contrast, according to embodiments of this invention, a single multi-channel DC-DC converter can be used for multiple devices. As each channel of the multi-channel DC-DC converter is independently connectable to a device, multiple devices can be connected to the multiple channels. Accordingly, the system is more flexible as well as being smaller and less expensive as a single physical device (single DC-DC converter) can handle multiple devices. The power flexibility of existing multi-channel DC-DC converters is retained as multiple channels of the DC-DC converter can still be connected to the same device so that a higher current flow can be achieved, e.g. for charging and discharging a battery at different currents or for drawing high or low currents from the same device. In fact, the arrangement is more flexible than existing devices in this regard as the number of channels connected to any given device is only defined at the point of installation when connections are made to the device. Thus, a single multi-channel DC-DC converter can be used for many different systems which require different numbers of channels. Any channels not used by one device are still available for use by other devices.

Furthermore, the devices connected to an elevator system may be changed or upgraded over time (for example, installation of solar panels to reduce a building's carbon emissions). The power control system according to the invention can be updated after the power control system has been installed into an elevator system. For example, if a larger or newer battery is installed which is capable of faster charging or discharging, the number of channels of the multi-channel DC-DC converter that are connected to the battery can be changed without replacing the DC-DC-converter. Additionally or alternatively, installation of solar panels in an existing elevator system will not require a new DC-DC converter to be installed if there are spare channels available on the multi-channel DC-DC converter.

Because the different channels of the multi-channel DC-DC converter may be connected to any device upon installation, with flexibility of connection left to the installer, the controller cannot know in advance which device is connected to a given channel. This is different from previous arrangements where a single multi-channel DC-DC converter was always connected to a single device. Therefore, the controller previously knew in advance which device was connected to the DC-DC converter and simply had to vary the number of channels operated for that device. By contrast, with the arrangement of this disclosure, the controller is programmed with the required information for each channel after installation. Thus, the controller receives and stores information for each channel that tells the controller which type of device is connected to each channel. This stored information allows the controller to send an appropriate control signal to the correct channel of the multi-channel DC-DC converter in order to control the power flow within the elevator system correctly, irrespective of how the channels and device are physically connected.

The power control system may therefore be more easily adapted to the type of elevator system in which it is being used. For example, a particular elevator system may have high instantaneous power requirements. In such an elevator system, several channels (e.g. the first, second, and third channels) of the DC-DC converter may be connected to a single device (e.g. a battery or supercapacitor power source), because this increases the maximum current that can be carried between the device and the elevator system compared to using a single channel. In this case, the information stored and received on the controller would indicate that the first, second, and third channels are each connected to the same power source, thereby allowing the controller to send an appropriate control signal to the relevant channels of the DC-DC converter to effect an appropriate power draw. For example, all three channels could be operational when the power source is supplying maximum power to the elevator system.

In another example, a particular elevator system may have a requirement for redundancy in the power supply. In such an elevator system, different channels of the DC-DC converter may be connected to different devices (e.g. several power sources) because this allows each power source to provide power to the elevator system independently. In this case, the information stored and received on the controller may indicate for example that the first channel is connected to a first power source, the second channel is connected to a second power source, and so on. This allows the controller to send an appropriate control signal to the relevant channel of the multi-channel DC-DC converter e.g. to draw current from the relevant power source(s) when it is required. As the controller is programmable in this way, the installer is not required to connect each power source to a particular channel or channels of the multi-channel DC-DC converter, but rather is free to connect the various power sources to whichever channels are convenient. The controller is than programmed with information that identifies the physical connections that have been made so that the controller can control the devices appropriately.

The controller of the power control system may comprise at least a processor and a memory. The processor and memory may be any suitable and desired type. The controller may control the direction and magnitude of current and/or voltage on any or all of the channels of the DC-DC converter at any time. In some examples, the controller uses pulse width modulated signals to control each of the channels of the DC-DC converter. The controller may be arranged to output one control signal per channel so as to be able to control all channels independently.

The stored information may be in any suitable and desired format. The information may include at least information identifying which device is connected to which channel(s) of the DC-DC converter (e.g. a unique identifier for each device). The information includes the type of device (e.g. battery, supercapacitor, wind turbine or solar panel, or other load). It may also include information about the device, such as: the maximum current and/or voltage that the device can provide (if applicable) or receive (if applicable) and/or the energy storage capacity (if applicable). Such parameters can be important to protect the device (e.g. to protect the energy storage device) and/or to prolong the lifetime of the device (especially energy storage devices).

The controller may receive the information at any suitable and desired time. In some examples, the information will be received by the controller prior to installing the power control system into an elevator system. This may be provided as a default configuration on the assumption that connections of the various channels will be made in a particular way. In some examples, the information may be received by the controller after the power control system is installed in an elevator system. This allows freedom of installation as described above. Additionally, the connections between the channels of the DC-DC converter and the device may be changed (e.g. if a device is replaced or if a device is added to or removed from the system). The information stored on the controller may be updated at any desired time, in accordance with the operating needs of the elevator system.

It will be appreciated that the elevator system may comprise a number of other components, such as an elevator car hoisted inside an elevator shaft by any suitable means, for example by ropes or a linear motor, beam climber or hydraulic system. The elevator system may also comprise a general controller, which may control the motion of the elevator car (e.g. to control stops at landing floors and/or emergency stops).

The multi-channel DC-DC converter may be any suitable and desired type for converting one DC voltage to another DC voltage. For example, the converter may be a buck converter, a boost converter, or a buck-boost converter. The converter may be bidirectional, for example to operate with devices which may both supply and receive energy, meaning that current needs to flow in both directions across the converter. It will be appreciated that not all channels of the multi-channel DC-DC converter need to be of the same type. For example, a mixture of buck channels, boost channels and/or buck-boost channels may be provided. Some or all of these may be bi-directional. For maximum flexibility, it is advantageous for every channel to be a bi-directional buck-boost converter.

In some examples, each channel of the multi-channel DC-DC converter is independently connected to the controller, and the controller is configured to send an independent control signal to each channel of the multi-channel DC-DC converter. Each channel may be connected to one output of the controller. Therefore, each channel may receive an independent control signal from the controller (i.e. each channel is independently controlled). Each channel may receive any desired signal from the controller without any effect on any of the other channels of the system, meaning that the controller is capable of controlling the channels in any desired manner. The result of these independent connections is that any channel may be connected to any device.

Optionally, a plurality of channels of the multi-channel DC-DC converter may be connected to a single device. In this instance, it may not be desirable for the channels to act independently of one another. Therefore, the controller may send the same signal to a plurality of channels of the multi-channel DC-DC converter. Hence, a plurality of channels of the multi-channel DC-DC converter may optionally perform the same function even if their connection to the controller is independent of one another.

In some examples, the controller is configured to control each channel of the multi-channel DC-DC converter based at least on the stored information for that channel. For example, the device connected to a channel may affect: when the channel is operational; the maximum current flowing through a channel; and/or which direction current flows through the channel. The stored information allows the controller to send an appropriate control signal to the correct channel of the multi-channel DC-DC converter in order to achieve the desired control state of the elevator system. For example, a channel connected to a solar panel source may receive a different signal from a channel connected to an energy storage device such as a battery.

The channels of the multi-channel DC-DC converter may be used to provide power to a device such as lighting or a display screen, etc. For example, one or more channels may be connected to a load that operates at a particular supply voltage, e.g. 48 V DC. However, in some examples, the at least one device is a power source. The power source may be any suitable and desired type which is capable of supplying DC power to the elevator system. For example, the power source may include a battery, a supercapacitor, a wind turbine and/or a solar panel. The power source may additionally be capable of storing energy, for example if the power source is a battery or super capacitor. Such energy storage devices may be capable of both supplying and receiving energy, i.e. they may be rechargeable. Energy may be recovered from the elevator system regeneratively, e.g. during braking or when a heavy load is descending in the elevator system such that it can drive the motor.

In some examples, the at least one device comprises a plurality of power sources connected to different channels. The power control system may comprise any number of power sources. Each power source may be connected to any number of channels of the DC-DC converter (i.e. a power source may be connected to one channel or to a plurality of channels of the DC-DC converter). However, each channel is only connected to one power source.

A plurality of power sources may be used to provide a level of redundancy to the elevator system. For example, a power source connected to the power control system may be used to provide power to the elevator system when an AC mains source experiences a brownout or a blackout (i.e. the voltage and/or current supplied by an AC mains source reduces). Alternative power sources are also useful for reducing cost, e.g. solar energy or wind energy generated locally can be used when available to reduce power drawn from costly sources such as grid power. Such local energy sources can also be used to charge energy storage devices such as batteries and/or supercapacitors.

In some examples, at least one power source of the elevator system is a battery. The battery may be any suitable and desired type. The controller may be arranged to charge the battery from any of: another device in the power control system; a mains (i.e. grid) power source; and/or the elevator motor/generator during a period of regenerative power production.

In some examples, at least one power source of the elevator system comprises a solar or wind power source. The solar or wind power source may be any suitable and desired type, for example a solar power source may comprise one or more crystalline silicon, thin film, or multi-junction cells. Any number of solar cells may be used, or indeed any number of panels of cells. A plurality of solar cells or solar panels may be treated as separate power sources, or they may be connected together as a single power source. The solar power source may be situated anywhere in the elevator system with sufficient exposure to light (e.g. they may be located on a roof of an elevator car if the car operates on the outside of the building), or they may be part of a power system of the building in which the elevator system is located (e.g. on a roof or walls of a building). A wind power source may be a vertical axis or horizontal axis wind turbine or a plurality of such turbines. Wind power sources may also be located in any suitable position, e.g. on the roof of the elevator car, but more likely on the roof of the building. The solar or wind power source may be capable of supplying power to another device in the power control system, in addition to the elevator system. For example, if the power control system also comprises an energy storage device such as a battery, the solar power source may be capable of charging the energy storage device during periods of excess power production, or when the charge stored on the energy storage device is below a predetermined charge level. This arrangement is particularly advantageous as both the energy storage device and the solar or wind power source can be connected to different channels of the same multi-channel DC-DC converter, thereby facilitating power transfer between the two devices. In particular, with the installation flexibility of the multi-channel DC-DC converter described here, an existing elevator system without at least one of an energy storage device or a solar or wind power source (or maybe without any of these) can readily be upgraded to include one or more of them, e.g. both an energy storage device and a solar or wind power source (or both a solar power source and a wind power source), simply by connecting the new device(s) to one or more channels of the multi-channel DC-DC converter.

In some examples, the channels of the multi-channel DC-DC converter are each connected between two DC rails. The two DC rails may carry two different voltage levels. For example, one of the two DC rails may be a low voltage or ground and the other may be a high voltage rail. Together the two voltage rails form a DC bus or a DC link with other parts of the elevator power system.

In some examples, an AC mains power source is connected via an AC-DC converter between the two DC rails at an input of the multi-channel DC-DC converter. The power system may be arranged to use the AC mains source to provide power directly to the elevator system, and/or it may be arranged to use the AC mains source to provide energy to at least one device of the power control system.

In some examples, the power system may operate in a regenerative braking mode. In certain modes of operation (e.g. when the elevator car is moving downwards with a load heavier than the counterweight), the load may drive the motor as a generator and thereby produce power that may be passed through the multi-channel DC-DC converter to be stored on at least one energy storage device, e.g. a battery or supercapacitor.

In some examples, the multi-channel DC-DC converter comprises at least four channels, optionally at least six channels, optionally at least eight channels, optionally at least ten channels. It will be appreciated that while these examples have even numbers of channels, the multi-channel DC-DC converter may of course have an odd number of channels (e.g. 3, 5, 7, 9, etc.) instead. The multi-channel DC-DC converter may comprise any number of channels. The number of channels may be chosen based on the number of devices required and/or the current required from a given device. For example, a number of channels may be connected to a single device in order to increase the maximum current that may flow between the device and other elements of the elevator system.

In some examples, four or more channels of the multi-channel DC-DC converter are connected to an energy storage device (e.g. a battery or supercapacitor). In some examples, a subset of two or more of the four or more channels of the multi-channel DC-DC converter are in an operational state when the energy storage device is being charged; and any number of the four or more channels of the multi-channel DC-DC converter are in an operational state when the energy storage device is being discharged. These arrangements are advantageous where the maximum output current of the energy storage device during discharge is higher than the maximum input current of the energy storage device during charging. Therefore, using four channels during discharge enables a higher current to be drawn from the energy storage device, while using two channels during charging limits the input current to the energy storage device. This enables the higher discharge current of the energy storage device to be used to provide higher instantaneous power to the elevator system during periods of high power requirement (e.g. during start-up accelerations, or when moving upwards with a high load).

In some examples, two channels of the multi-channel DC-DC converter are connected to a solar or wind power source. The solar or wind power source may supply energy to the elevator system and/or another device of the power control system (e.g. an energy storage device such as a battery or a supercapacitor). In an example of the invention, the multi-channel DC-DC converter may have six channels, of which four are connected to an energy storage device and two are connected to a solar or wind power source.

In some examples, the multi-channel DC-DC converter is a multi-channel bidirectional buck-boost converter. In such examples, each channel of the multi-channel DC-DC converter may be a bidirectional buck-boost channel. In some examples, each channel of the multi-channel DC-DC converter comprises two semiconductor power modules connected in series. The two semiconductor power modules may form a half-bridge. Each channel may comprise an inductor. One terminal of the inductor may be connected at a node between the two semiconductor power modules, and one terminal of the inductor may be independently connectable to a device. The semiconductor power modules and inductors of the multi-channel DC-DC converter may be any suitable and desired type. For example, the semiconductor power modules may be transistors. Many types of transistors may be used. For example, the semiconductor power modules may be MOSFETs (e.g. Silicon Carbide MOSFETs), BJTs, FETs, IGBTs, or any combination of these. The inductor may be an integral component of the circuit board of the DC-DC converter, or it may be connected at a later stage (e.g. based on the required connections to the devices of a particular elevator system). Having the inductor as an integral component is advantageous in terms of reducing the number of required connections to be made at installation. However, in some examples, the choice of inductor may depend on the particular device that is to be connected to the channel. Therefore, having a terminal (or terminals) to which an inductor can later be connected adds flexibility to the system at the time of installation by allowing the installer to customise the multi-channel DC-DC converter for the particular device(s) with which it is to be used.

According to a second aspect of the present invention, there is provided a method in accordance with claim 15.

In some examples, there is provided an elevator system comprising a power control system, the power control system comprising:
a multi-channel DC-DC converter comprising a plurality of parallel channels, wherein each channel of the multi-channel DC-DC converter is independently connectable to a device; and
a controller configured to control each channel of the multi-channel DC-DC converter;
wherein the controller is configured to receive and store for each channel of the multi-channel DC-DC converter information on the device connected to that channel;
wherein the information comprises the type of device; and
wherein the controller is updatable to update the type of device information.

The power control system may be used in any application where multiple power devices need to be controlled, in particular where a system may switch between multiple energy sources and/or energy storage devices. For example, the power control system may be used in a building with multiple energy sources (e.g. a mains (grid) connection, solar panel, wind turbine, and battery/supercapacitor), or a vehicle with multiple energy sources (e.g. a motor, solar panel, wind turbine and battery/supercapacitor).

### Brief Description of the Drawings

Certain examples of the invention will now be described, by way of example only, with reference to the accompanying drawings in which:
Figure 1 is a circuit diagram of a DC-DC converter and controller in accordance with an example of the present invention;
Figures 2 and 3 are circuit diagrams of power control systems in accordance with examples of the present invention;
Figure 4 is a circuit diagram of a DC-DC converter and controller in accordance with an example of the present invention;
Figures 5 and 6 are circuit diagrams of power control systems in accordance with examples of the present invention;
Figure 7 is a schematic diagram showing components of an elevator system in accordance with an example of the present invention;
Figure 8 is a schematic diagram showing a controller and devices in accordance with an example of the present invention; and
Figure 9 is a flow chart showing steps of a method in accordance with an example of the present invention.

### Detailed Description

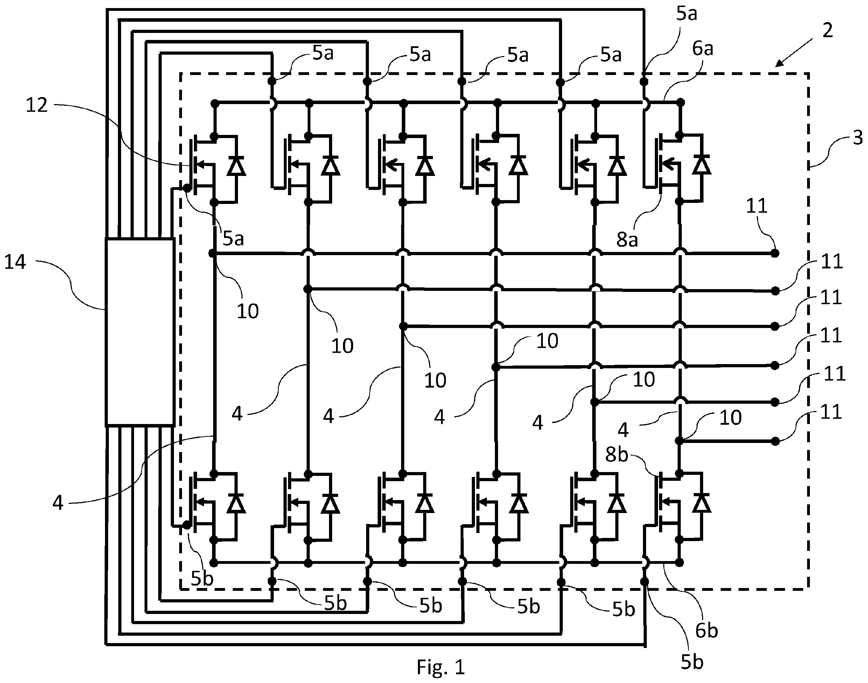

Figure 1 is a circuit diagram of a multi-channel DC-DC converter 2 and controller 14 according to an example of the present invention.

In this example, the multi-channel DC-DC converter 2 comprises six channels 4.

The channels 4 of the multi-channel DC-DC converter 2 are connected in parallel between two DC rails 6a, 6b. In this example, the top DC rail 6a is a high voltage rail and the bottom DC rail 6b is a low voltage rail which may be ground or any potential lower than the high voltage rail. Although six channels are shown, it will be appreciated that any number of channels 4 may be used, as they can simply be added or removed in parallel between the two DC rails 6a, 6b in order to meet the needs of various systems.

Each channel 4 comprises two semiconductor power modules 8a, 8b (for simplicity, only the modules 8a, 8b of the right hand channel 4 are labelled), which in this example are transistors 8a, 8b, connected in series between the top DC rail 6a and the bottom DC rail 6b. At the connection between the transistors 8a, 8b of each channel 4 there is a node 10 which may be used to connect the channel 4 to a device 18 (not shown in Fig. 1). In Fig. 1, the nodes 10 are shown connected to terminals 11 at one side of a PCB 3. The terminals 11 provide a point of connection to a device 18, optionally via an inductor, if required.

The PCB 3 also has a first set of six terminals 5a for connecting to the first set of six semiconductor power modules (e.g. transistors) 8a on the top rail 6a and a second set of six terminals 5b for connecting to the second set of six semiconductor power modules (e.g. transistors) 8b on the bottom rail 6b. The terminals 5a, 5b provide connections to control the operation of the semiconductor power modules. In this example, the terminals 5a, 5b connect to the gates of the respective transistors 8a, 8b. As shown in Fig. 1, a controller 14 can connect to each terminal 5a, 5b of the PCB 3 (or to a subset of those terminals 5a, 5b where not all channels 4 are required) and can provide the required control signals to the semiconductor power modules 8a, 8b to control the operation of channels 4.

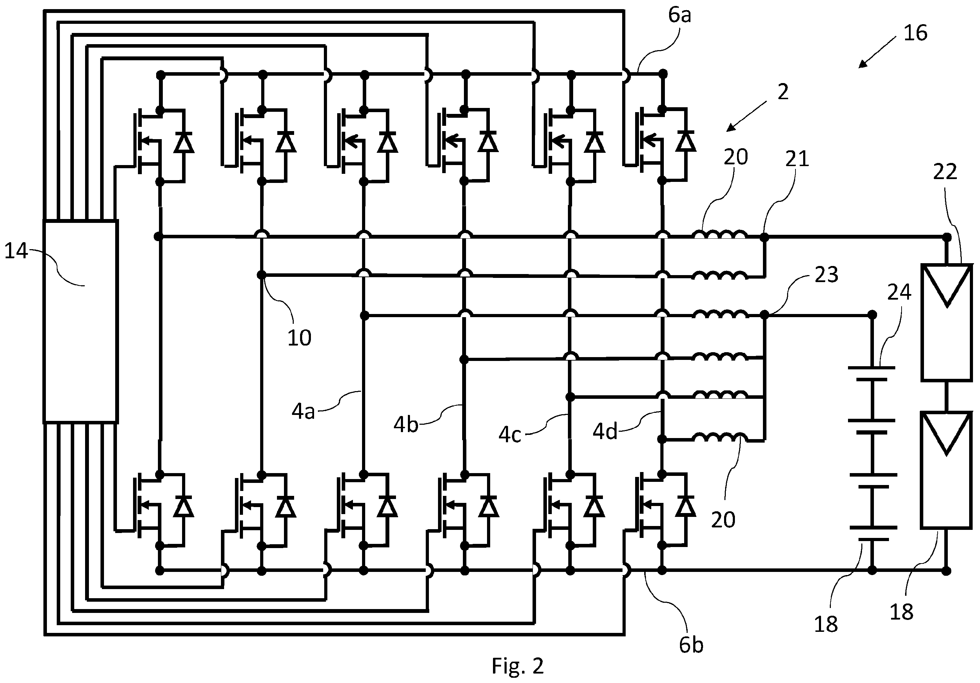

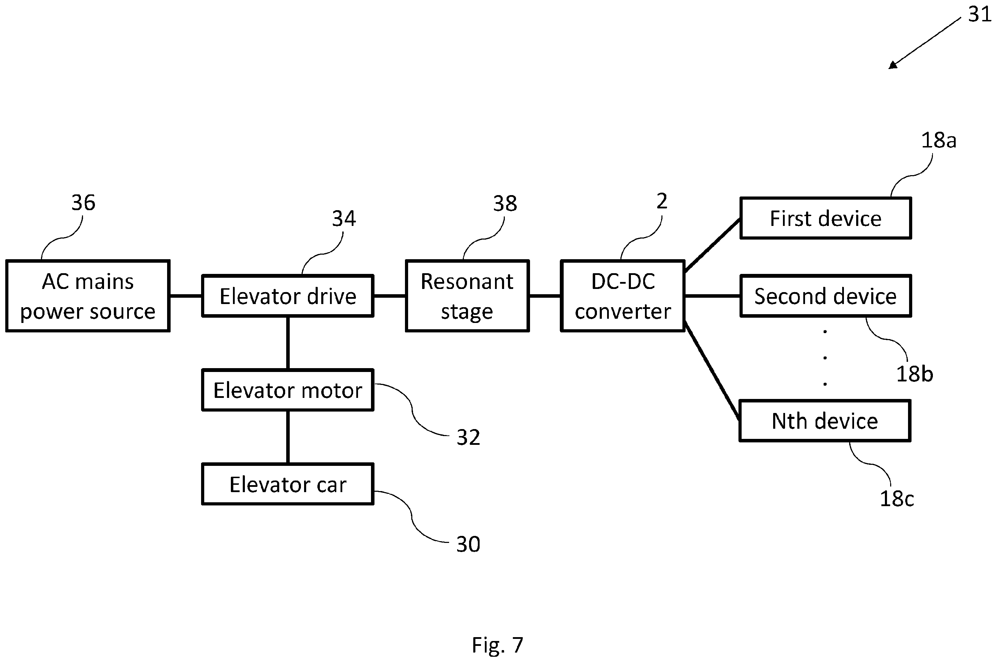

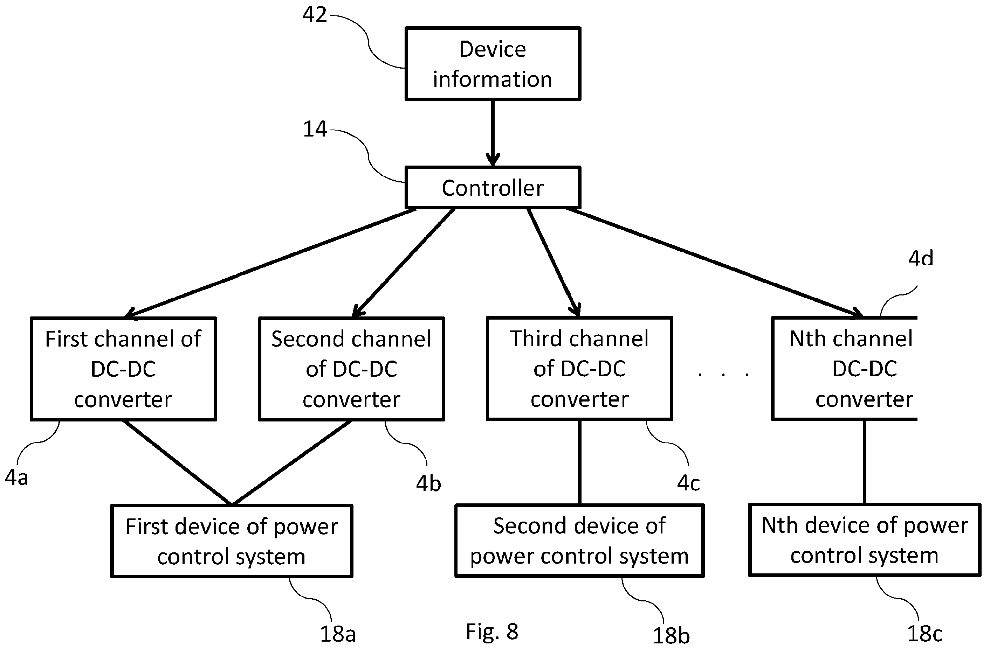

In some examples (e.g. as shown in Figs. 2-6), the device 18 (which is indicated in Figs. 7 and 8, but may be connected to nodes 10 or terminals 11 in Figs. 1-6) may be connected to a channel 4 via an inductor 20. The inductance of the inductor 20 may be chosen based on the device 18 that is being connected to the channel 4. Therefore, in some examples, it may be advantageous to manufacture a DC-DC converter 2 without inductors 20 such that the inductors 20 may be chosen later based on the requirements of a particular elevator system.

The base terminal 12 (only one labelled in Fig. 1 for simplicity) of each semiconductor power module (e.g. transistor) 8a, 8b is independently connected (e.g. via terminals 5a, 5b) to the controller 14. This allows the controller 14 to send independent control signals to each of the power control modules 8a, 8b in order to change the switching state of each of the power control modules 8a, 8b as desired. In some examples, the controller 14 uses pulse width modulated (PMW) signals to control the power control modules 8a, 8b.

In the examples of Figures 2 to 6, the PCB 3 and terminals 5a, 5b are not shown for simplicity. However, it will be appreciated that each of these examples may, if desired, provide the channels 4, including semiconductor power control modules 8a, 8b, on a separate PCB 3 with terminals 5a, 5b for connection to a controller 14.

Such arrangements are particularly flexible as a single design of PCB 3 (with a defined number of channels 4) can then be used for many different applications, which may not need to use all channels 4 of the PCB 3. In other examples, the controller 14 may be provided on the PCB 3.

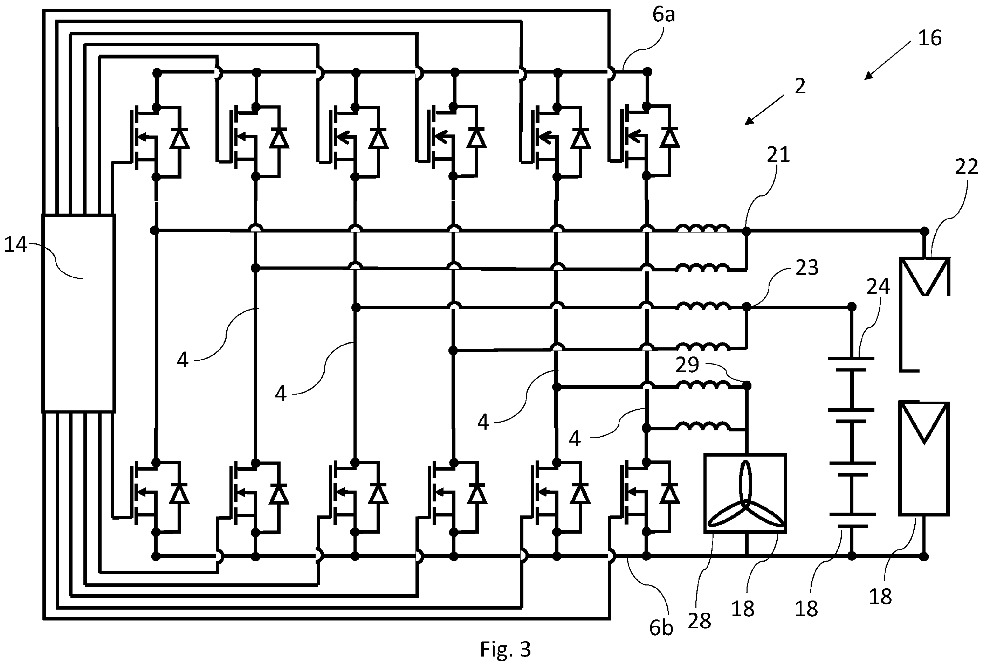

Figures 2 and 3 are circuit diagrams of power control systems 16 according to examples of the present invention. The multi-channel DC-DC converter 2 and controller 14 of Figures 2 and 3 are the same as shown in the example of Figure 1.

In Figures 2 and 3, the nodes 10 of the multi-channel DC-DC converter 2 are connected to devices 18. In these examples, the devices 18 are connected to each of the nodes 10 via an inductor 20. The inductors 20 may be any of any suitable size and type and may be chosen appropriately for the respective devices 18. In some examples, all the inductors 20 of the power control system 16 will have the same inductance, whereas in other examples the inductances connected to some or all of the channels 4 may be different. In some examples, the devices 18 may be connected directly to a node 10 of the multi-channel DC-DC converter 2 (i.e. no inductor 20 is used).

In Figure 2, the multi-channel DC-DC converter 2 is connected to two devices 18. Two channels 4 of the multi-channel DC-DC converter 2 are connected to an array of solar cells 22. The two channels 4 are connected together at a node 21 between the inductors 20 and the solar cells 22, such that the solar cells 22 may provide power to both channels 4 in parallel if required. In this example two solar cells 22 are shown but any number may be used. Using multiple channels 4 in parallel allows a higher current draw from the solar cells 22. With a larger array of solar cells 22, other examples may connect the solar cells 22 to more than two channels 4.

The other four channels 4 of the multi-channel DC-DC converter 2 in Figure 2 are connected to an array of batteries 24. The four channels 4 are connected together at a node 23 between the inductors 20 and the batteries 24, such that the batteries 24 may provide power to, or receive power from, all four channels 4 in parallel if required. In this example four batteries 24 are shown but any number may be used.

With the arrangement shown in Figure 2, two channels 4a, 4b are in an operational state when the batteries 24 are being charged, and four channels 4a, 4b, 4c, 4d are in an operational state when the batteries 24 are being discharged. Using four channels 4a-d during discharge enables a higher current to be drawn from the batteries 24, while using only two channels 4a-b during charging limits the input current to the batteries 24, thereby protecting the batteries 24 and prolonging their life. The higher current supplying ability enables the batteries 24 to provide higher instantaneous power to the elevator system during periods of high power requirement (e.g. during start-up accelerations, or when moving upwards with a high load).

The independent connections between the controller 14 and the channels 4 of the multi-channel DC-DC converter 2 help to achieve this control, i.e. allowing each individual channel 4a-4d to be operational or non-operational as required. During charging, the controller 14 may send operational signals (i.e. PWM signals) to only two of the channels 4a, 4b (specifically to the semiconductor power control modules 8a, 8b of each channel 4a, 4b) connected to the batteries 24, whereas during high power discharge the controller 14 may send operational signals (i.e. PWM signals) to all four channels 4a-d connected to the batteries 24.

Figure 3 shows another possible configuration of a power control system 16. In this example, the power control system 16 comprises three devices 18, each of which is connected to two channels 4 of the multi-channel DC-DC converter 2. In addition to the solar cells 22 and battery 24 of the example of Figure 2, this example includes a wind power source 28 connected via node 29 to two channels 4 of the multi-channel DC-DC converter 2.

Figures 2 and 3 demonstrate just two examples of the possible configurations of a power control system 16 of the present invention. They are intended to demonstrate that the connections between the various channels 4 of the multi-channel DC-DC converter 2 and the various devices 18 are flexible, and may be configured according to the requirements of a particular elevator system. For example, Figs. 2 and 3 illustrate that the same multi-channel DC-DC converter 2 can be used with different sets of devices 18. For example, it can be used in elevator systems with any combination of: solar panels, wind turbines, and/or batteries and/or any other devices that require DC-DC conversion to connect for power transfer to/from the DC link formed by the top rail 6a and bottom rail 6b.

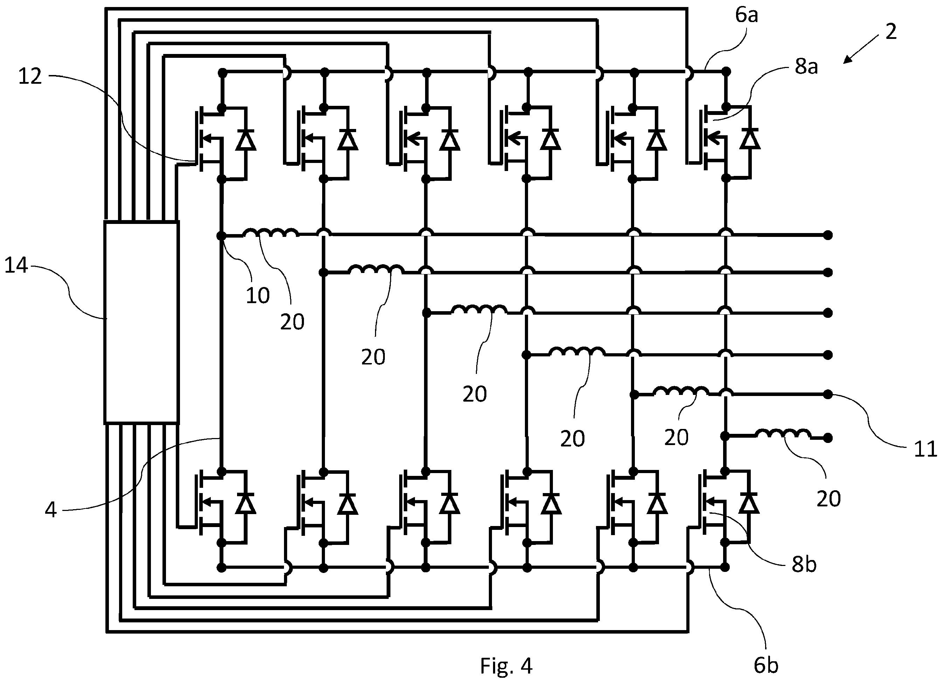

Figure 4 is a circuit diagram of a multi-channel DC-DC converter 2 and controller 14 according to another example of the present invention. In this example, the inductors 20 are formed as part of the multi-channel DC-DC converter 2. For example, they may be an integral part of the same PCB 3 as the other components of the multi-channel DC-DC converter 2, i.e. they may be supplied with the PCB 3, already attached to the PCB 3 regardless of the devices 18 that may later be connected to the PCB 3. This may be advantageous in some examples because it removes the additional step of attaching or mounting the inductors 20 at a later stage. All the other elements of the multi-channel DC-DC converter 2 may be the same as the previous examples shown in Figure 1.

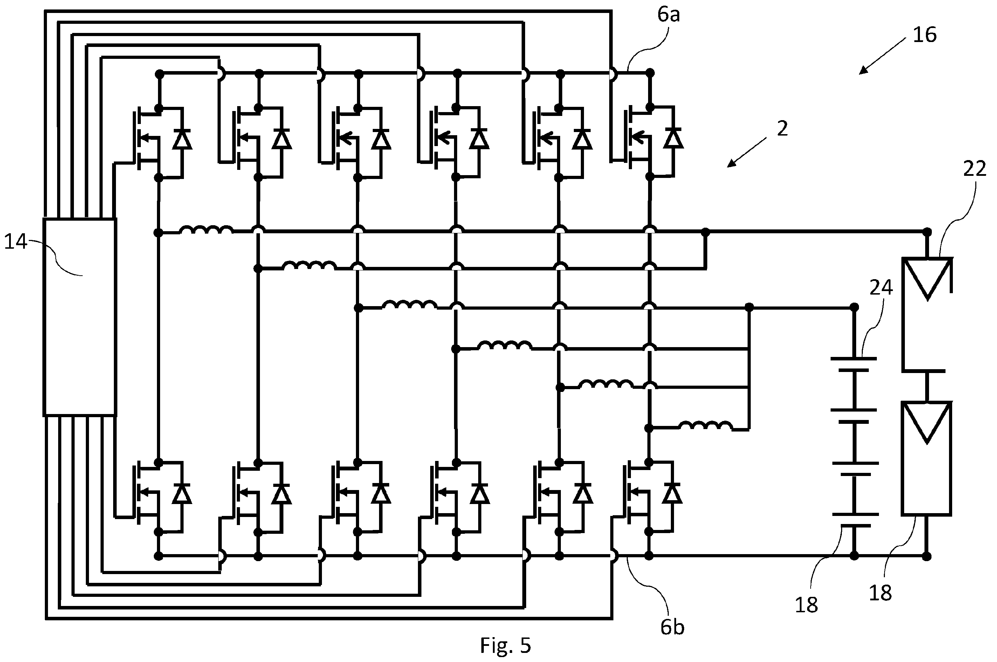

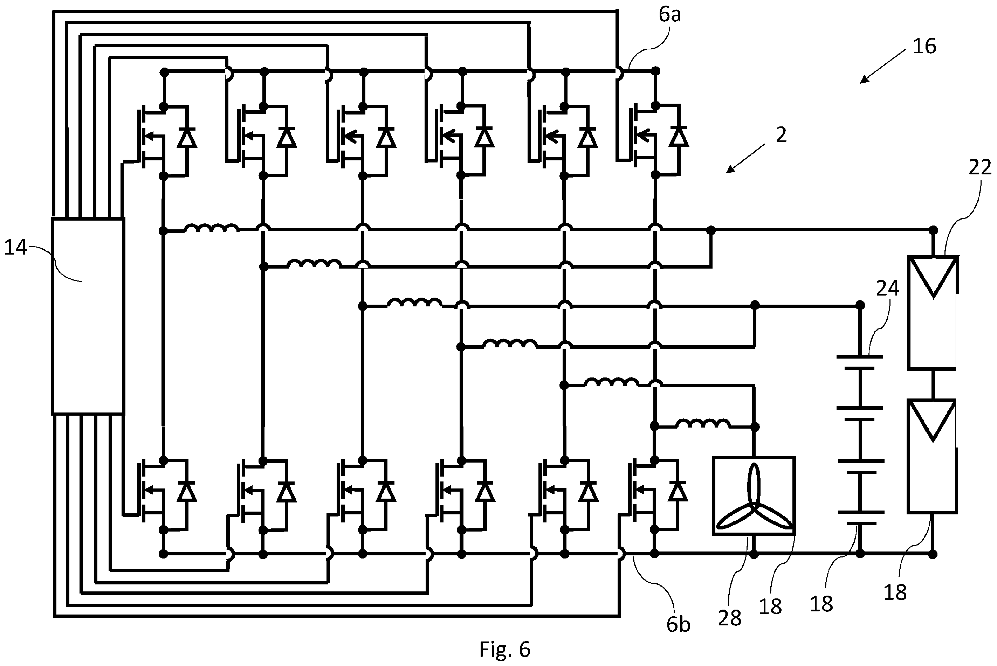

Figures 5 and 6 are circuit diagrams of power control systems 16 according to further examples of the present invention. These examples are similar to Figures 2 and 3, and show the multi-channel DC-DC converter 2 and controller 14 of Figure 4 connected to devices 18. In Figure 5, the devices 18 are batteries 24 and solar cells 22. Figure 6 additionally includes a wind power source 28. Figures 5 and 6 may operate in the same manner as the examples of Figure 2 and 3.

The flexibility of the multi-channel DC-DC converter 2, can be appreciated from the different scenarios shown and described above in relation to Figures 1 to 6. As any device 18 can be connected to any channel 4 of the multi-channel DC-DC converter 2, the controller 14 needs to be configured so that it knows which device 18 is connected to each channel 4. In other words, in order for the controller 14 to be able to send appropriate control signals (typically PWM signals) to the semiconductor power modules 8a, 8b of a particular channel 4, it needs to know which device 18 is connected to that channel. Alternatively, for a given device 18, in order for the controller 14 to send the control signals to that device 18, it needs to know which channel 4 the device 18 is connected to. Therefore, the controller 14 can be programmable by the user or the installer so as to configure the controller 14 appropriately after a particular physical setup of the multi-channel DC-DC converter 2 has been chosen. Therefore, the controller 14 receives and stores information for each channel 4 on the device 18 connected to that channel 4. The information that is received and stored in the controller 14 can be anything suitable for identifying the device 18, e.g. it could be a device name or a device ID number or serial number. Alternatively, it could include a generic device type (e.g. energy storage device or energy generation device) and/or a specific type (e.g. battery or supercapacitor or solar cell or wind turbine) and/or a make (e.g. manufacturer) and/or model identifier. The information could include other information relevant to the device 18, e.g. size information (e.g. battery or supercapacitor capacity), energy generating capability (e.g. power capability), energy receiving capability (e.g. charge rate or charge current for an energy storage device). Any or all of this information can be received and stored in the controller 14 in association with a particular channel 4. As this information is programmed into the controller 14, the hardware connections of the multi-channel DC-DC converter 2 are completely flexible such that any channel 4 can be connected to any device 18. Moreover, it is easy to reconfigure the controller 14 if any hardware changes are made to the elevator system. For example, if unused channels 4 are later connected to a new power source such as a newly installed array of solar cells 22 or wind turbine 28, the controller 14 can simply be updated by a minor software change (sending the information to the controller 14 so that it can receive it and store it in association with the channel 4 that has been used). Equally, if a channel 4 is changed for a new use (e.g. if a channel previously used for a battery 24 is changed for use with solar cells 22) the controller 14 can likewise be updated in a straightforward manner.

It will be appreciated that the controller 14 may be arranged to receive the information relating to the device 18 together with information on the channel 4 to which the device 18 has been connected. The controller 14 can store the appropriate association in its memory and can send appropriate control signals to the correct channel 4.

Figure 7 is a schematic diagram showing components of an elevator system 31 according to an example of the present invention. The elevator car 30 is driven by an elevator motor 32, which receives power through an elevator drive 34. These components may be any suitable and desired type. For example, the elevator car 30 may be suitable for carrying passengers and/or goods of any suitable size and number.

The elevator drive 34 may receive power from an AC mains power source 36, e.g. from an electric grid. The AC mains power source 36 may provide any suitable voltage and current, and may be connected to the elevator drive 34 in any suitable and desired way (e.g. via an AC-AC converter if required).

The elevator drive 34 may also receive power from the devices 18a-c where appropriate, e.g. where devices 18a-c are energy storage devices or power generating devices. The devices 18a-c are connected to the elevator drive 34 via a multi-channel DC-DC converter 2 which may be in accordance with any of the examples of the present disclosure (including any of the multi-channel DC-DC converters 2 shown in Figures 1-6), and a resonant stage 38. The resonant stage 38 may be arranged to convert the DC voltage from the multi-channel DC-DC converter 2 (i.e. from the DC link formed by top rail 6a and bottom rail 6b) to a DC voltage suitable for powering the elevator drive 34.

In some examples of the present invention, the elevator system 31 of Figure 7 allows energy to flow in both directions along any of the connections between the various components. For example, the AC mains source 36 may receive power from the elevator motor 32 during regenerative braking of the elevator car 30, or it may receive energy from solar cells 22 (if present), e.g. where that solar cell energy cannot be used for powering the car 30 directly or stored in batteries 24. Similarly, power may be transferred from one device 18a-c to another if desired (e.g. a solar cell 22 may be used to charge a battery 24, if present).

Figure 8 is a schematic diagram showing a controller 14 and devices 18a-c according to an example of the present invention. The controller 14 receives and stores information 42 about the device 18a-c connected to each channel 4 of the multi-channel DC-DC converter 2. The information 42 may be received in any format and may contain any desired information 42 about the device 18a-c. At a minimum, the information 42 will indicate which device 18a-c is connected to which channel 4 of the multi-channel DC-DC converter 2. This allows the controller 14 to send appropriate control signals to each channel 4 of the multi-channel DC-DC converter 2.

The controller 14 is independently connected to each channel 4 of the multi-channel DC-DC converter 2. This allows the controller 14 to send a different control signal to each channel 4. This helps to achieve complete flexibility in the connections between the channels 4 of the multi-channel DC-DC converter 2 and the devices 18a-c of the elevator system 30.

As shown in Fig.8, a device 18a-c may be connected to multiple channels 4a-d. For example, in Figure 8 the first and second channels 4a, 4b are both connected to the first device 18a of the power control system 16. However, as each of the channels 4a-d is independently connected to the controller 14, the first and second channels 4a, 4b may still receive different control signals in this example. This may be advantageous when a different number of channels 4a, 4b are used in different operational modes of the device 18a. For example, a battery 24 may require fewer operational channels 4a, 4b during charging than during discharging. In the context of Fig. 8, if the device 18a is a battery 24 (or other energy storage device), it may be charged using only one of the channels 4a or 4b, but may be discharged using both channels 4a and 4b for a higher current supply.

In the example of Figure 8, the remaining channels 4c, 4d are each connected to a single device 18b, 18c. However, it will be appreciated that each device 18a-c may be connected to any desired number of channels 4a-d in the power control system 16 of the present invention.

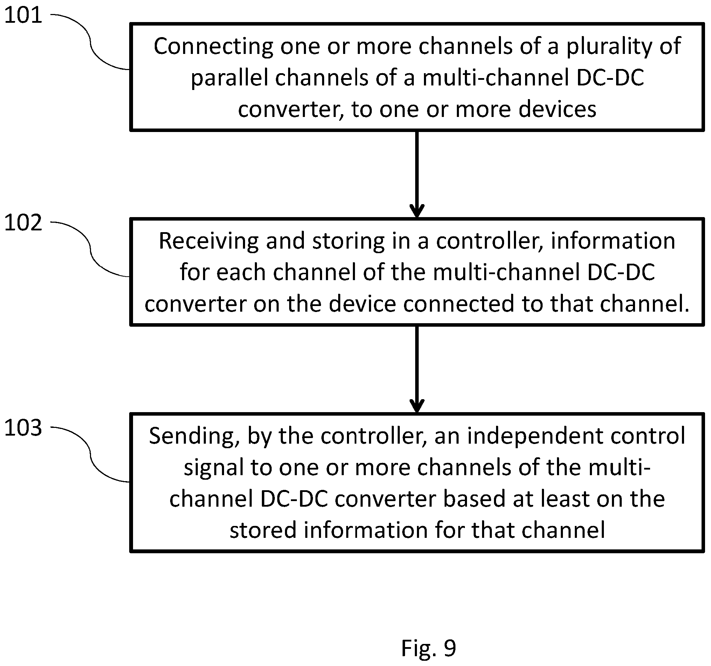

Figure 9 is a flow chart showing steps of a method according to an example of the present invention. The method comprises the following steps:
Step 101 comprises connecting one or more channels 4 of a plurality of parallel channels 4 of a multi-channel DC-DC converter 2, to one or more devices 18.
Step 102 comprises receiving and storing in a controller 14, information 42 for each channel 4 of the multi-channel DC-DC converter 2 on the device 18 connected to that channel.
Step 103 comprises sending, by the controller 14, an independent control signal to one or more channels 4 of the multi-channel DC-DC converter 2 based at least on the stored information 42 for that channel.

It will be appreciated by those skilled in the art that the invention has been illustrated by describing one or more specific aspects thereof, but is not limited to these aspects; many variations and modifications are possible, within the scope of the accompanying claims.

## Claims

1. An elevator system (31) comprising a power control system (16), the power control system (16) comprising:
a multi-channel DC-DC converter (2) comprising a plurality of parallel channels (4), wherein each channel (4) of the DC-DC converter (2) is independently connectable to a device (18); and
a controller (14) configured to control each channel (4) of the multi-channel DC-DC converter (2);
wherein the controller (14) is configured to receive and store for each channel (4) of the DC-DC converter (2) information (42) on the device (18) connected to that channel (4);
**characterised in that**:
the information (42) comprises the type of device (18); and
the controller (14) is updatable to update the type of device information (42).

2. The elevator system (31) as claimed in claim 1, wherein each channel (4) of the multi-channel DC-DC converter (2) is independently connected to the controller (14); and
the controller (14) is configured to send an independent control signal to each channel (4) of the multi-channel DC-DC converter (2).

3. The elevator system (31) as claimed in claims 1 or 2, wherein the controller (14) is configured to control each channel (4) of the multi-channel DC-DC converter (2) based at least on the stored information (42) for that channel (4).

4. The elevator system (31) as claimed in claims 1, 2 or 3, wherein the at least one device (18) is a power source.

5. The elevator system (31) as claimed in any preceding claim, wherein the at least one device (18) comprises a plurality of power sources connected to different channels (4).

6. The elevator system (31) as claimed in claims 4 or 5, wherein at least one power source of the elevator system (31) is a battery (24).

7. The elevator system (31) as claimed in claims 4, 5, or 6, wherein at least one power source of the elevator system (31) comprises a solar (22) or wind (28) power source.

8. The elevator system (31) as claimed in any preceding claim, wherein the channels (4) of the multi-channel DC-DC converter (2) are each connected between two DC rails 6a, 6b.

9. The elevator system (31) as claimed in claim 8, comprising an AC mains power source (36) connected via an AC-DC converter between the two DC rails 6a, 6b at an input of the multi-channel DC-DC converter (2).

10. The elevator system (31) as claimed in any preceding claim, wherein four or more channels (4) of the multi-channel DC-DC converter (2) are connected to an energy storage device (18).

11. The elevator system (31) as claimed in claim 10, wherein a subset of two or more of the four or more channels (4) of the multi-channel DC-DC converter (2) are in an operational state when the energy storage device (18) is being charged; and
any number of the four or more channels (4) of the multi-channel DC-DC converter (2) are in an operational state when the energy storage device (18) is being discharged.

12. The elevator system (31) as claimed in any preceding claim, wherein two channels (4) of the multi-channel DC-DC converter (2) are connected to a solar cell (22).

13. The elevator system (31) as claimed in any preceding claim, wherein the multi-channel DC-DC converter (2) is a multi-channel bidirectional buck-boost converter.

14. The elevator system (31) as claimed in claim 13, wherein each channel (4) of the multi-channel DC-DC converter (2) comprises two semiconductor power modules 8a, 8b connected in series;
and
each channel (4) comprises an inductor (20);
wherein one terminal of the inductor (20) is connected at a node 10 between the two semiconductor power modules 8a, 8b, and one terminal of the inductor (20) is independently connectable to a device (18).

15. A method of controlling a power control system (16) in an elevator system (31), comprising:
connecting one or more channels (4) of a plurality of parallel channels (4) of a multi-channel DC-DC converter (2), to one or more devices (18);
receiving and storing in a controller (14), information (42) for each channel (4) of the multi-channel DC-DC converter (2) on the device (18) connected to that channel (4); and
sending, by the controller (14), an independent control signal to one or more channels (4) of the multi-channel DC-DC converter (2) based at least on the stored information (42) for that channel (4);
**characterised in that**:
the information (42) comprises the type of device (18); and
further **characterised by**:
updating the controller (14) to update the type of device information (42).

## Patentansprüche

1. Aufzugssystem (31), umfassend ein Leistungssteuerungssystem (16), wobei das Leistungssteuerungssystem (16) Folgendes umfasst:
einen Mehrkanal-DC-DC-Wandler (2), der eine Vielzahl paralleler Kanäle (4) umfasst, wobei jeder Kanal (4) des DC-DC-Wandlers (2) unabhängig mit einer Vorrichtung (18) verbindbar ist; und
eine Steuerung (14), die dazu konfiguriert ist, jeden Kanal (4) des Mehrkanal-DC-DC-Wandlers (2) zu steuern;
wobei die Steuerung (14) dazu konfiguriert ist, für jeden Kanal (4) des DC-DC-Wandlers (2) Informationen (42) über die mit dem Kanal (4) verbundene Vorrichtung (18) zu empfangen und zu speichern;
**dadurch gekennzeichnet, dass**:
die Informationen (42) den Vorrichtungstyp (18) umfassen; und
der Controller (14) aktualisierbar ist, um die Vorrichtungstypinformationen (42) zu aktualisieren.

2. Aufzugssystem (31) nach Anspruch 1, wobei jeder Kanal (4) des Mehrkanal-DC-DC-Wandlers (2) unabhängig mit der Steuerung (14) verbunden ist; und
der Controller (14) dazu konfiguriert ist, an jeden Kanal (4) des Mehrkanal-DC-DC-Wandlers (2) ein unabhängiges Steuersignal zu senden.

3. Aufzugssystem (31) nach Anspruch 1 oder 2, wobei die Steuerung (14) dazu konfiguriert ist, jeden Kanal (4) des Mehrkanal-DC-DC-Wandlers (2) basierend zumindest auf den gespeicherten Informationen (42) für den Kanal (4) zu steuern.

4. Aufzugssystem (31) nach Anspruch 1, 2 oder 3, wobei die mindestens eine Vorrichtung (18) eine Stromquelle ist.

5. Aufzugssystem (31) nach einem der vorhergehenden Ansprüche, wobei die mindestens eine Vorrichtung (18) eine Vielzahl von Stromquellen umfasst, die mit unterschiedlichen Kanälen (4) verbunden sind.

6. Aufzugssystem (31) nach Anspruch 4 oder 5, wobei mindestens eine Stromquelle des Aufzugssystems (31) eine Batterie (24) ist.

7. Aufzugssystem (31) nach Anspruch 4, 5 oder 6, wobei mindestens eine Energiequelle des Aufzugssystems (31) eine Solar- (22) oder Wind- (28) Stromquelle umfasst.

8. Aufzugssystem (31) nach einem der vorhergehenden Ansprüche, wobei jeder Kanal (4) des Mehrkanal-DC-DC-Wandlers (2) zwischen zwei Gleichstromschienen 6a und 6b geschaltet ist.

9. Aufzugssystem (31) nach Anspruch 8, umfassend eine Wechselstromnetzquelle (36), die über einen AC-DC-Wandler zwischen den beiden Gleichstromschienen 6a und 6b mit einem Eingang des Mehrkanal-DC-DC-Wandlers (2) verbunden ist.

10. Aufzugssystem (31) nach einem der vorhergehenden Ansprüche, wobei vier oder mehr Kanäle (4) des Mehrkanal-DC-DC-Wandlers (2) mit einer Energiespeichervorrichtung (18) verbunden sind.

11. Aufzugssystem (31) nach Anspruch 10, wobei eine Untergruppe von zwei oder mehr der vier oder mehr Kanäle (4) des Mehrkanal-DC-DC-Wandlers (2) in einem Betriebszustand ist, wenn die Energiespeichervorrichtung (18) geladen wird; und
eine beliebige Anzahl der vier oder mehr Kanäle (4) des Mehrkanal-DC-DC-Wandlers (2) in einem Betriebszustand ist, wenn die Energiespeichervorrichtung (18) entladen wird.

12. Aufzugssystem (31) nach einem der vorhergehenden Ansprüche, wobei zwei Kanäle (4) des Mehrkanal-DC-DC-Wandlers (2) mit einer Solarzelle (22) verbunden sind.

13. Aufzugssystem (31) nach einem der vorhergehenden Ansprüche, wobei der Mehrkanal-DC-DC-Wandler (2) ein bidirektionaler Mehrkanal-Abwärts-/Aufwärtswandler ist.

14. Aufzugssystem (31) nach Anspruch 13, wobei jeder Kanal (4) des Mehrkanal-DC-DC-Wandlers (2) zwei in Reihe geschaltete Leistungshalbleitermodule 8a und 8b umfasst;
und
jeder Kanal (4) eine Induktivität (20) umfasst;
wobei ein Anschluss der Induktivität (20) mit einem Knoten 10 zwischen den beiden Leistungshalbleitermodulen 8a und 8b verbunden ist und ein Anschluss der Induktivität (20) unabhängig mit einer Vorrichtung (18) verbindbar ist.

15. Verfahren zur Steuerung eines Leistungssteuerungssystems (16) in einem Aufzugssystem (31), umfassend:
Verbinden eines Kanals oder mehrerer Kanäle (4) einer Vielzahl paralleler Kanäle (4) eines Mehrkanal-DC-DC-Wandlers (2) mit einer oder mehreren Vorrichtungen (18);
Empfangen und Speichern von Informationen (42) für jeden Kanal (4) des Mehrkanal-DC-DC-Wandlers (2) in der mit dem Kanal (4) verbundenen Vorrichtung (18) in einer Steuerung (14); und
Senden eines unabhängigen Steuersignals durch die Steuerung (14) an einen Kanal oder mehrere Kanäle (4) des Mehrkanal-DC-DC-Wandlers (2), und zwar basierend zumindest auf den gespeicherten Informationen (42) für den jeweiligen Kanal (4);
**dadurch gekennzeichnet, dass**:
die Informationen (42) den Vorrichtungstyp (18) umfassen; und
ferner **gekennzeichnet durch**:
Aktualisieren der Steuerung (14) zum Aktualisieren der Vorrichtungstypinformationen (42).

## Revendications

1. Système d'ascenseur (31) comprenant un système de commande de puissance (16), le système de commande de puissance (16) comprenant :
un convertisseur CC-CC multicanal (2) comprenant une pluralité de canaux parallèles (4), chaque canal (4) du convertisseur CC-CC (2) pouvant être connecté indépendamment à un dispositif (18) ; et
un contrôleur (14) configuré pour contrôler chaque canal (4) du convertisseur CC-CC multicanal (2) ;
dans lequel le contrôleur (14) est configuré pour recevoir et stocker pour chaque canal (4) du convertisseur CC-CC (2) des informations (42) concernant le dispositif (18) connecté à ce canal (4) ;
**caractérisé en ce que** :
les informations (42) comprennent le type de dispositif (18) ; et
le contrôleur (14) peut être mis à jour pour mettre à jour les informations du type de dispositif (42).

2. Système d'ascenseur (31) selon la revendication 1, dans lequel chaque canal (4) du convertisseur CC-CC multicanal (2) est connecté indépendamment au contrôleur (14) ; et
le contrôleur (14) est configuré pour envoyer une signal de contrôle indépendant à chaque canal (4) du convertisseur CC-CC multicanal (2).

3. Système d'ascenseur (31) selon les revendications 1 ou 2, dans lequel le contrôleur (14) est configuré pour contrôler chaque canal (4) du convertisseur CC-CC multicanal (2) sur la base au moins des informations stockées (42) pour ce canal (4).

4. Système d'ascenseur (31) selon les revendications 1, 2 ou 3, dans lequel le ou les dispositifs (18) sont une source d'énergie.

5. Système d'ascenseur (31) selon l'une quelconque des revendications précédentes, dans lequel le ou les dispositifs (18) comprennent une pluralité de sources d'alimentation connectées à différents canaux (4).

6. Système d'ascenseur (31) selon les revendications 4 ou 5, dans lequel au moins une source d'énergie du système d'ascenseur (31) est une batterie (24).

7. Système d'ascenseur (31) selon les revendications 4, 5 ou 6, dans lequel au moins une source d'énergie du système d'ascenseur (31) comprend une source d'énergie solaire (22) ou éolienne (28).

8. Système d'ascenseur (31) selon l'une quelconque des revendications précédentes, dans lequel les canaux (4) du convertisseur CC-CC multicanal (2) sont chacun connectés entre deux rails CC 6a, 6b.

9. Système d'ascenseur (31) selon la revendication 8, comprenant une source d'alimentation secteur CA (36) connectée via un convertisseur CA-CC entre les deux rails CC 6a, 6b à une entrée du convertisseur CC-CC multicanal (2).

10. Système d'ascenseur (31) selon l'une quelconque des revendications précédentes, dans lequel quatre canaux ou plus (4) du convertisseur CC-CC multicanal (2) sont chacun connectés à un dispositif de stockage d'énergie (18).

11. Système d'ascenseur (31) selon la revendication 10, dans lequel un sous-ensemble de deux ou plus des quatre canaux ou plus (4) du convertisseur CC-CC multicanal (2) sont dans un état opérationnel lorsque le dispositif de stockage d'énergie (18) est en cours de charge ; et
un nombre quelconque des quatre canaux ou plus (4) du convertisseur CC-CC multicanal (2) sont dans un état opérationnel lorsque le dispositif de stockage d'énergie (18) est en cours de décharge.

12. Système d'ascenseur (31) selon l'une quelconque des revendications précédentes, dans lequel deux canaux (4) du convertisseur CC-CC multicanal (2) sont chacun connectés à une cellule solaire (22).

13. Système d'ascenseur (31) selon l'une quelconque des revendications précédentes, dans lequel le convertisseur CC-CC multicanal (2) est un convertisseur abaisseur-élévateur bidirectionnel multicanal.

14. Système d'ascenseur (31) selon la revendication 13, dans lequel chaque canal (4) du convertisseur CC-CC multicanal (2) comprend deux modules de puissance à semi-conducteurs 8a, 8b connectés en série ;
et
chaque canal (4) comprend un inducteur (20) ;
dans lequel une borne de l'inducteur (20) est connectée à un nœud 10 entre les deux modules de puissance à semi-conducteurs 8a, 8b, et une borne de l'inducteur (20) peut être connectée indépendamment à un dispositif (18).

15. Procédé de commande d'un système de commande de puissance (16) dans un système d'ascenseur (31), comprenant :
la connexion d'un ou plusieurs canaux (4) d'une pluralité de canaux parallèles (4) d'un convertisseur CC-CC multicanal (2), à un ou plusieurs dispositifs (18) ;
la réception et le stockage dans un contrôleur (14) d'informations (42) pour chaque canal (4) du convertisseur CC-CC (2) concernant le dispositif (18) connecté à ce canal (4) ; et
l'envoi, par le contrôleur (14), d'un signal de contrôle indépendant à un ou plusieurs canaux (4) du convertisseur CC-CC multicanal (2) sur la base au moins des informations stockées (42) pour ce canal (4) ;
**caractérisé en ce que** :
les informations (42) comprennent le type de dispositif (18) ; et
**caractérisé en outre par** :
la mise à jour du contrôleur (14) pour mettre à jour les informations du type de dispositif (42).
